# EUROPÄISCHE PATENTANMELDUNG

(11) **EP 1 717 730 A1**
(43) Veröffentlichungstag der Anmeldung: **02.11.2006**
(21) Anmeldenummer: 05014056.5
(22) Anmeldetag: 29.06.2005
(51) Int. Cl.: G06K 19/077

(54) **Kontaktloser Datenträger mit thermosensitiver Deckschicht und Herstellungsverfahren**

(30) Priorität: 20.04.2005 EP 05008629; 21.06.2005 EP 05013310
(71) Anmelder: VisionCard PersonalisierungsgmbH, 6175 Kematen/Tirol (AT)
(72) Erfinder: Wolny, Robert, 6063 Rum (AT)
(74) Vertreter: Ostermann, Thomas

(57) **Zusammenfassung**

Die Erfindung betrifft eine Datenträger zur kontaktlosen Übertragung von elektrischen Signalen an eine Lese/Schreibeinheit mit einem Kartenkörper enthaltend mehrere Kartenschichten aus Papier oder Thermokunststoff, zwischen denen eine Antennenspule und ein Halbleiterchip angeordnet sind, wobei die Kartenschichten (2, 3, 4) mittels eines Niedrigtemperaturklebers (9) derart laminiert sind, dass neben herkömmlichen Papiermaterial auch eine aus einem thermosensitiven Papiermaterial bestehende Deckschicht (2, 4) thermobedruckbar ist.

## Beschreibung

Die Erfindung betrifft einen Datenträger nach dem Oberbegriff des Patentanspruchs 1.

Ferner betrifft die Erfindung ein Verfahren zur Herstellung eines Datenträgers gemäß dem Patentanspruch 1.

Aus der DE 196 32 117 Cl ist ein kartenförmiger Datenträger zur kontaktlosen Übertragung von elektrischen Signalen an eine Lese-/Schreibeinheit bekannt, der aus zwei Papierschichten besteht, zwischen denen ein Halbleiterchip und eine Antennenspule angeordnet sind. Die Kartenschichten sind durch eine Klebeschicht miteinander verbunden.

Aufgabe der vorliegenden Erfindung ist es, einen Datenträger bestehend aus Papier- oder Karton- oder Thermokunststoffmaterial sowie ein Verfahren zur Herstellung desselben bereitzustellen, so dass neben einer normal bedruckten Karte auch ein nachträgliches Bedrucken von Deckseiten aus Thermopapier oder Karton oder Thermokunststoff ermöglicht wird.

Zur Lösung dieser Aufgabe weist die Erfindung die Merkmale des Patentanspruchs 1 auf.

Der besondere Vorteil der Erfindung besteht darin, dass zumindest eine Deckschicht des erfindungsgemäßen Datenträgers nachträglich, insbesondere mittels eines Thermodruckers, bedruckbar ist. Es hat sich überraschenderweise gezeigt, dass durch Verwendung eines auf die Kartenschichten aufgebrachten Niedrigtemperaturklebers ein Laminierprozess bei relativ geringer Temperatur und relativ geringem Druck ermöglicht wird, so dass nachfolgend eine beispielsweise aus Thermopapier oder Thermokunststoff bestehende Deckschicht bedruckbar ist, ohne dass die zu bedruckende Fläche vollständig eingeschwärzt wird. Es lässt sich somit neben einer normal bedruckten Papier- oder Karton- oder Kunststoffkarte auch eine "weiße" Papier- oder Karton- oder Kunststoffkarte herstellen, die nachträglich auf Kundenwunsch variabel bedruckbar ist. Vorteilhaft kann bei Verwendung des Datenträgers als Karte für die Zutrittskontrolle, wie beispielsweise Skilifte, das Gültigkeitsdatum des Zutritts nachträglich gedruckt werden.

Die Erfindung ermöglicht die kostengünstige Herstellung einer Karton-/Papier- oder Kunststoffkarte. Durch die Verwendung eines Niedrigtemperaturklebers kann eine Laminierung bei etwa 50°C erfolgen, so dass Energie und Zeit gespart werden. Durch das allseitige Aufbringen des Niedrigtemperaturklebers auf den Kartenschichten mit Ausnahme der Außenseiten der Deckschichten kann eine innige und feste Verbindung der Kartenschichten erfolgen.

Nach einer Weiterbildung der Erfindung ist mindestens eine Deckschicht aus einem Thermopapier oder Thermokarton oder Thermokunststoff gebildet, sodass die Deckschicht mittels eines Thermodruckers bedruckbar ist.

Zur Lösung der Aufgabe weist das erfindungsgemäße Verfahren die Merkmale des Anspruchs 6 auf.

Der besondere Vorteil des erfindungsgemäßen Verfahrens besteht darin, dass auf einfache weise neben einer doppelseitig bedruckten Karte auch eine einseitig bedruckte Karte aus Papier-, Karton- oder Thermokunststoffmaterial herstellbar ist, die ein einfaches Bedrucken in Abhängigkeit von Kundenwünschen zu einem späteren Zeitpunkt auf der anderen Seite ermöglicht. Die Bedruckung des Datenträgers kann unabhängig vom Herstellungsprozess des Datenträgers erfolgen, wobei die Auslieferung des Datenträgers dadurch beschleunigt werden kann, dass auf Lager gehaltenen Datenträgern lediglich die Bedruckung vorgenommen werden muss.

Weitere Vorteile ergeben sich aus den weiteren Unteransprüchen.

Die Erfindung wird anhand einer Figur näher erläutert.

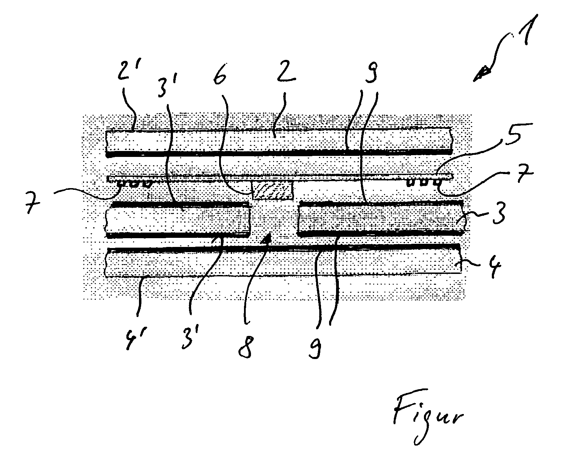

Die Figur zeigt einen Querschnitt durch einen Datenträger.

Ein Datenträger 1 zur kontaktlosen Übertragung von elektrischen Signalen an ein Lese-/Schreibgerät weist einen mehrschichtigen Kartenaufbau auf. Eine obere Deckschicht 2, eine Kernschicht 3 und eine untere Deckschicht 4 bestehen jeweils aus einem Papiermaterial. Unter Papiermaterial wird zum einen Papier und zum anderen Karton verstanden. Im vorliegenden Ausführungsbeispiel sind die Schichten 2, 3, 4 als ein thermosensitives Papiermaterial, nämlich aus Thermokarton oder Thermopapier gebildet.

Alternativ kann die Deckschicht 2 auch als ein Thermokunststoffmaterial ausgebildet sein, das im Vergleich zum Thermopapier wasserresistent ist. Das Thermokunststoffmaterial kann beispielsweise als eine thermobedruckbare PVC-Schicht ausgebildet sein.

Nach einer weiteren Ausführungsform der Erfindung kann die aus einem Thermokunststoffmaterial bestehende Deckschicht 2 mit einer Kernschicht 3 aus einem Kunststoffmaterial kombiniert sein.

Zwischen der oberen Deckschicht 2 und der Kernschicht 3 ist eine relativ dünne Trägerschicht 5 aus einem Kunststoffmaterial (Polyesterfolie) vorgesehen, die zum einen einen Halbleiterchip 6 und zum anderen eine Antennenspule 7 trägt. Diese Trägerschicht 5 wird als Halbzeug bereitgestellt und zusammen mit den Schichten 2, 3, 4 bei einer verringerten Temperatur, vorzugsweise 40° C bzw. in einem Bereich von 40° C bis 50° C bei geringem Druck laminiert. Alternativ kann die Trägerschicht 5 auch aus einem Papiermaterial bestehen.

Die Kartenschichten 2 und 4 sind im Ausführungsbeispiel aus einem Thermopapiermaterial oder Thermokartonmaterial hergestellt, wobei die Deckschicht 2 und/oder die Deckschicht 4 außenseitig mit einer Bedruckung versehen sein können. Die Bedruckung der Deckschichten 2, 4 kann mittels Siebdruck- oder Offsetdruck erfolgen. In der Kernschicht 3 ist in einem für den Halbleiterchip 6 vorgesehenen Bereich eine Ausnehmung 8 zur Aufnahme des Halbleiterchips 6 ausgestanzt. Vorzugsweise entspricht die Dicke der Ausnehmung 8 der Dicke des Halbleiterchips 6, sodass dieser im eingesetzten Zustand bündig zu einer der unteren Deckschicht 4 zugewandten Flachseite 3' der Kernschicht 3 abschließt.

Die beiden Flachseiten 3' der Kernschicht 3 werden mit einem Niedrigtemperaturkleber 9 vollflächig beschichtet. Ferner werden die obere Deckschicht 2 und die untere Deckschicht 4 jeweils auf einer Innenseite derselben mit dem Niedrigtemperaturkleber 9 vollflächig beschichtet. Nachdem die Trägerfolie 5 unter Einbettung des Halbleiterchips 6 in der Ausnehmung 8 an die Kernschicht 3 positioniert und angeheftet worden ist, werden die übereinander gelegten Kartenschichten 2, 3 und 4 bei einer Temperatur im Bereich von 40°C bis 50°C laminiert. Dabei wird unter anderem die Trägerfolie 5 vollflächig mit der oberen Deckschicht 2 sowie mit der Kernschicht 3 verklebt. Es ergibt sich somit eine flächige Verbindung des gesamten Kartenkörpers unter Einschluss der Trägerfolie 5 sowie den Deckschichten 2, 4. Der Datenträger 1 bildet nun einen kompakten und stabilen Kartenverbund, wobei ein seitliches Aufplatzen an der Schmalseite des Datenträgers 1 wirksam verhindert wird. Mittels eines zeitlich unabhängigen und später auszuführenden Bedruckvorgangs können sichtbare Außenseiten der Deckschichten 2' und 4' der Deckschichten 2 bzw. 4 in einem dafür vorgesehen Bereich der Außenseiten 2', 4' mit beispielsweise einem Gültigkeitsdatum bedruckt werden, wenn die Datenträgerkarte für die Zutrittskontrolle Einsatz finden sollte. Das thermosensitive Material der Deckschichten 2, 4 ermöglicht ein solches nachträgliches Bedrucken beispielsweise mittels eines Thermodruckers bedruckt werden können.

Nach einer alternativen Ausführungsform können die Kartenschichten 2, 3, 4 auch aus einem unterschiedlichen Papiermaterial bestehen. Wesentlich ist, dass mindestens eine Deckschicht 2, 4 thermobedruckbar sein kann.

Der fertig laminierte Datenträger kann beispielsweise als Skipasskarte eingesetzt werden, wobei die Bedruckung oder Personalisierung desselben relativ kurzfristig vor Ausgabe der Karte an den Kunden erfolgen kann.

## Patentansprüche

1. Datenträger zur kontaktlosen Übertragung von elektrischen Signalen an eine Lese-/Schreibeinheit mit einem Kartenkörper enthaltend mehrere Kartenschichten aus Papier oder Karton oder Thermokunststoff, zwischen denen eine Antennenspule und ein Halbleiterchip angeordnet sind, **dadurch gekennzeichnet, dass** die Kartenschichten (2, 3, 4) mittels eines Niedrigtemperaturklebers (9) derart laminiert sind, dass eine aus einem thermosensitiven Material bestehende Deckschicht (2, 4) bedruckbar ist.

2. Datenträger nach Anspruch 1, **dadurch gekennzeichnet, dass** die Deckschicht (2, 4) mittels eines Thermodruckers bedruckbar sein kann.

3. Datenträger nach Anspruch 1 oder 2, **dadurch gekennzeichnet, dass** die Kernschicht (3) eine Ausnehmung (8) aufweist zur Aufnahme des Halbleiterchips (6).

4. Datenträger nach einem der Ansprüche 1 bis 3, **dadurch gekennzeichnet, dass** die Dicke der Ausnehmung (8) zur Dicke des Halbleiterchips (6) korrespondiert.

5. Datenträger nach einem der Ansprüche 1 bis 4, **dadurch gekennzeichnet, dass** neben einer Deckschicht aus herkömmlichen Papier oder Kartonmaterial oder Kunststoffmaterial auch mindestens eine Deckschicht (2, 4) aus einem Thermopapier oder aus einem Thermokarton oder aus einem Thermokunststoff bestehen kann.

6. Verfahren zur Herstellung eines Datenträgers nach einem der Ansprüche 1 bis 5,
- wobei eine Trägerschicht (5) bestehend aus einem Folienmaterial mit einer integrierten Antennenspule und einem integrierten Halbleiterchip als Halbzeug bereitgestellt wird,
- dass die Kernschicht (3) auf ihren beiden Flachseiten (3') mit einem Niedrigtemperaturkleber (9) beschichtet wird,
- dass in die Kernschicht (3) eine Ausnehmung (8) zur Aufnahme des Halbleiterchips (6) gestanzt wird,
- dass die obere Deckschicht (2) und/oder die untere Deckschicht (4) jeweils auf einer Innenseite mit dem Niedrigtemperaturkleber (9) beschichtet werden, und
- dass die Kernschicht (3) und die Deckschichten (2, 4) unter Anlage der Trägerschicht (5) an der Kernschicht (3) bei einer Temperatur von 40°C bis 50°C laminiert werden.

7. Verfahren nach Anspruch 6, **dadurch gekennzeichnet, dass** die Kartenschichten (2, 3, 4) mit einem niedrigen Druck laminiert werden.

8. Verfahren nach Anspruch 6 oder 7, **dadurch gekennzeichnet, dass** nach dem Laminiervorgang mindestens eine Deckschicht (2, 4) thermobedruckt wird.

9. Verwendung eines Datenträgers nach den Ansprüchen 1 bis 5 als Skipasskarte oder Zutrittskontrollkarte.
